Europäisches Patentamt

European Patent Office

Office européen des brevets

(11) Veröffentlichungsnummer: **0 220 528**
**A1**

(12) **EUROPÄISCHE PATENTANMELDUNG**

(21) Anmeldenummer: 86113602.6

(22) Anmeldetag: 02.10.86

(51) Int. Cl.⁴: **G09B 29/10**

(30) Priorität: 29.10.85 DE 3538422

(43) Veröffentlichungstag der Anmeldung:
06.05.87 Patentblatt 87/19

(84) Benannte Vertragsstaaten:
BE DE FR GB IT NL SE

(71) Anmelder: **Fried. Krupp Gesellschaft mit beschränkter Haftung**
**Altendorfer Strasse 103**
**D-4300 Essen 1(DE)**

(72) Erfinder: **Wentzell, Hubertus**
**Wyckstrasse 34**
**D-2800 Bremen 1(DE)**

(54) **Einrichtung zur Standortanzeige auf einer Karte.**

(57) Eine Einrichtung zur Standortanzeige auf einer Karte, insbesondere zur Anzeige einer Schiffsposition auf einer Seekarte, weist einen Kartenhalter mit einer Karten-Aufspannfläche und eine Projektionsvorrichtung zum Projizieren eines Lichtpunktes auf die Karte auf. Die Projektionsvorrichtung besteht aus einem einen gebündelten Lichtstrahl erzeugenden Projektionskopf und zwei separaten Antrieben zum Verstellen des Projektionskopfes, die über eine Steuerelektronik angesteuert werden. Zur günstigen Fertigung einer solchen Einrichtung unter Berücksichtigung eines geringen Platzbedarfes und einer einfachen Nachrüstbarkeit von sog. Kartentischen, ist der Projektionskopf auf der die Aufspannfläche tragenden Seite des Kartenhalters mit Abstand von diesem und um zwei zueinander orthogonalen Achsen dreh-oder schwenkbar angeordnet. Die Antriebe sind als den Projektionskopf um diese Achsen drehende Motoren, vorzugsweise Schrittmotoren, ausgebildet.

Fig.1

**EP 0 220 528 A1**

## Einrichtung zur Standortanzeige auf einer Karte

Die Erfindung betrifft eine Einrichtung zur Standortanzeige auf einer Karte, insbesondere zur Anzeige einer Schiffsposition auf einer Seekarte, der im Oberbegriff des Anspruchs 1 angegebenen Gattung.

Bei einer bekannten Einrichtung dieser Art, einem sog. Seekartenplotter, besteht die Aufspannfläche des als Kartentisch ausgebildeten Kartenhalters aus transparentem Material. In Sichtrichtung auf die Aufspannfläche hinter bzw. unter diese ist der Projektionskopf der Projektionsvorrichtung angeordnet. Der Projektionskopf ist auf einem Schlitten befestigt, der längs einer Schiene verschiebbar ist. Die Schiene ihrerseits ist auf einer dazu rechtwinklig am Kartentisch befestigten Führung bewegbar. Die von einem Positionsausgabegerät, z. B. Satellitenempfänger, ausgegebenen Meßdaten über die Schiffsposition werden von der Steuerelektronik in Bezug zu den Koordinaten der Seekarte gesetzt und entsprechende Verstellsignale an die Antriebe für Schlitten und Schiene gegeben. Der Projektionskopf wird in zwei orthogonalen Achsen entsprechend verschoben und der von dem Projektionskopf auf die Seekarte projizierte Lichtpunkt zeigt die Schiffsposition auf der Seekarte an.

Solche bekannten Seekartenplotter benötigen eine große Fläche und sind relativ schwer. Sie benötigen außerdem einen nicht geringen, konstruktiven mechanischen Aufwand. Das Aufspannen der Seekarte ist stets an die horizontale Aufspannfläche des Kartentisches gebunden. Eine Anbringung der Seekarte an einer vertikalen Wand, wie dies häufig gefordert wird, bei gleichzeitiger Projektion der Schiffsposition in die Seekarte ist nicht möglich.

Der Erfindung liegt die Aufgabe zugrunde, eine Einrichtung zur Standortanzeige auf einer Karte der eingangs genannten Art zu schaffen, die eine Anbringung der Karte sowohl auf einer horizontalen als auch auf einer vertikalen Fläche zuläßt und die durch geringen technischen Aufwand sowohl kostengünstig herzustellen ist, als auch ein Nachrüsten von vorhandenen Kartentischen ermöglicht.

Die Aufgabe ist bei einer Einrichtung zur Standortanzeige auf einer Karte der im Oberbegriff des Anspruchs 1 angegebenen Gattung erfindungsgemäß durch die Merkmale im Kennzeichenteil des Anspruchs 1 gelöst.

Die erfindungsgemäße Einrichtung hat den Vorteil, daß sie unabhängig vom Kartenhalter an einem raumfesten Punkt angeordnet werden und wahlweise auf einen an einer Vertikalwand befestigten oder auf einen auf einer Tischebene vorhandenen Kartenhalter gerichtet werden kann. Durch entsprechende Programmierung der Steuerelektronik werden dabei die geometrischen Bezüge zwischen dem Ort des Projektionskopfes und dem Ort des Kartenhalters automatisch erfaßt und gespeichert, so daß mit diesen Bezügen die in Positionskoordinaten der Karte umgerechneten Meßdaten des Standortes in zuordnungsrichtige Verstellsignale für die Schrittmotoren umgesetzt werden. Die Erfassung der geometrischen Bezüge erfolgt dabei durch manuelles Einstellen des Positionskopfes derart, daß der projizierte Lichtpunkt nacheinander auf drei Punkte in der Aufspannfläche trifft, deren Lage relativ zu dem Ort des Projektionskopfes bekannt ist. Aus den zur Ausrichtung des Projektionskopfes auf diese Punkte erforderlichen Drehwinkeln der Schrittmotoren kann die räumliche Zuordnung von Positionskopf und Karte und bei bekanntem Maßstab der Karte die Zuordnung der Meßdaten des Standortes zu den Positionskoordinaten der Karte selbsttätig festgelegt werden.

Zu dem beschriebenen Einrichten der Projektionsvorrichtung sind in dem Ausführungsbeispiel der Erfindung gemäß Anspruch 5 zwei Handschalter vorgesehen, mittels welcher eine willkürliche Dreh-und Schwenkbewegung des Projektionskopfes um jede seiner Drehachsen manuell ausgelöst werden kann.

Die Erfindung ist anhand von in der Zeichnung dargestellten Ausführungsbeispielen im folgenden näher beschrieben. Es zeigen jeweils in schematischer Darstellung

Fig. 1 eine perspektivische Ansicht einer Standortanzeigeeinrichtung,

Fig. 2 und 3 jeweils eine Seitenansicht einer Projektionsvorrichtung der Standortanzeigeeinrichtung in Fig. 1, teilweise geschnitten, gemäß einem ersten und zweiten Ausführungsbeispiel,

Fig. 4 ein Blockschaltbild einer Steuerelektronik mit Bedienungstableau in der Standortanzeigeeinrichtung in Fig. 1.

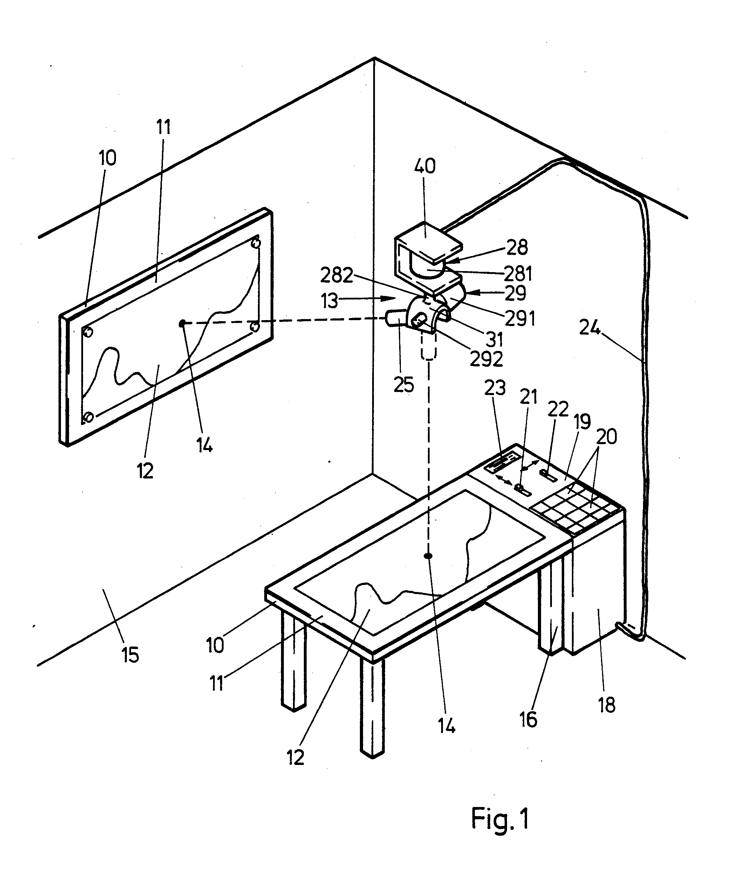

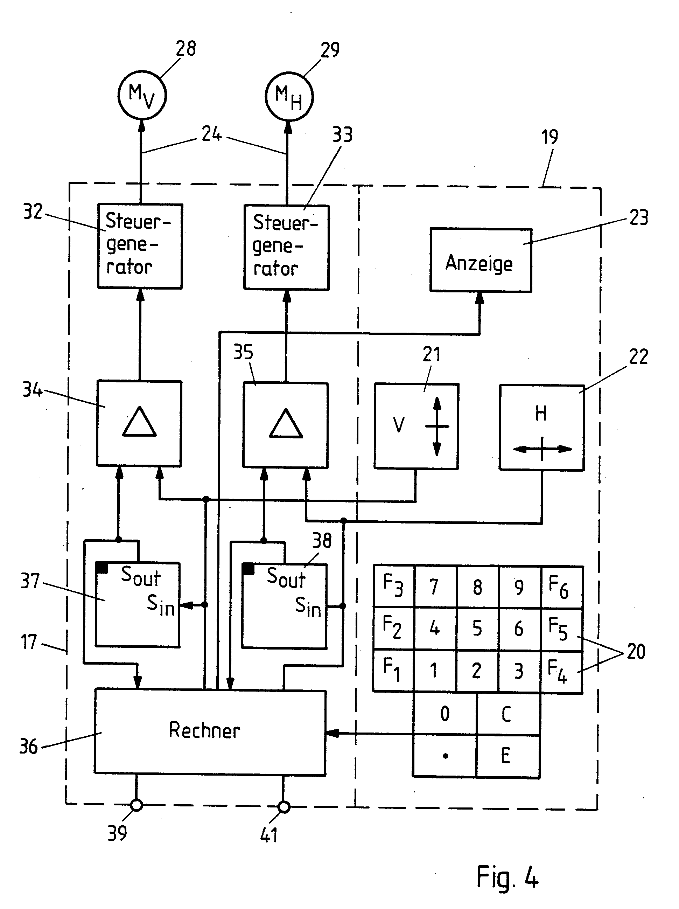

Die in Fig. 1 perspektivisch dargestellte Einrichtung zur Anzeige einer Schiffsposition auf einer Seekarte als Beispiel einer Standortanzeigeeinrichtung weist einen Kartenhalter 10 mit einer Aufspannfläche 11 zum Aufspannen einer Seekarte 12 und eine Projektionsvorrichtung 13 zum Projizieren eines Lichtpunktes 14 auf die Aufspannfläche 11 bzw. auf die dort befindliche Seekarte 12 auf. Der Kartenhalter 10 kann dabei wahlweise an einer vertikalen Wand 15 eines Raumes befestigt oder Teil eines in diesem Raum aufgestellten Kartentisches 16 sein. Zum Steuern der Projektionsvorrichtung 13 und damit zum koordinatenrichtigen Projizieren des Lichtpunktes 14 auf die Seekarte 12 ist eine Steuerelektronik 17 (Fig. 4) vorgesehen, die in einem Steuerschrank 18 untergebracht ist. Auf der Oberseite des Steuerschrankes 18 ist ein Bedienungstableau 19 mit Bedienungstasten 20, zwei Handschiebern 21, 22 und einer Anzeigevorrichtung 23 angeordnet. Die Projektionsvorrichtung 13 ist über ein Verbindungskabel 24 mit der Steuerelektronik 17 verbunden.

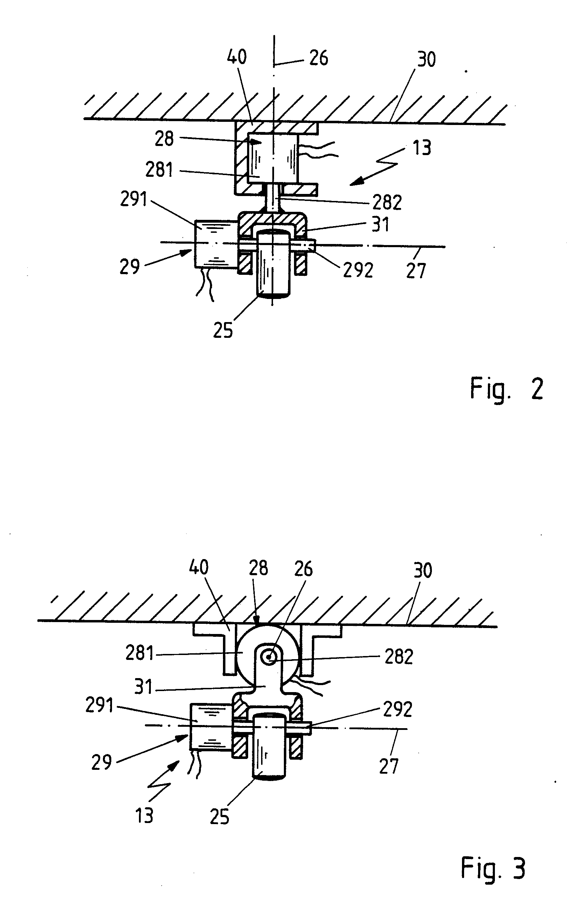

Die Projektionsvorrichtung 13 weist einen Projektionskopf 25 mit einer nicht dargestellten Laseroptik auf, die einen scharf gebündelten Laserstrahl erzeugt. Der Projektionskopf 25 ist auf der die Aufspannfläche 11 tragenden Seite des Kartenhalters 10 mit Abstand von dem entweder vertikal oder horizontal angeordneten Kartenhalter 10 raumfest angeordnet und um zwei zueinander orthogonale Achsen 26, 27 (Fig. 2 und 3) dreh-oder -schwenkbar. Von den beiden orthogonalen Achsen 26, 27 ist die eine Achse 26 räumlich feststehend, während die andere in einer zu der feststehenden Achse 26 rechtwinkligen Ebene dreh-oder -schwenkbar ist. Diese Ebene erstreckt sich in Fig. 2 rechtwinklig zur Papierebene, während sie in Fig. 3 von der Papierebene selbst gebildet ist. Um jede dieser Achsen 26, 27 wird der Projektionskopf 25 durch zwei separate, drehende (rotatorische) Schrittmotoren 28, 29 angetrieben. Die raumfeste Anordnung des Projektionskopfes 25, in den Ausführungsbeispielen gemäß Fig. 1 bis 3 an der Decke 30 eines Raumes, erfolgt zweckmäßigerweise durch Kaskadierung der Schrittmotoren 28, 29, was bedeutet, daß der Schrittmotor 28 mit seinem Gehäuse 281 fest an der Decke 30 befestigt ist, das Gehäuse 291 des Schrittmotors 29 an der Drehbewegung der Abtriebswelle 282 des Schrittmotors 28 teilnimmt und der Projektionskopf 25 von der Abtriebswelle 292 des Schrittmotors 29 gedreht wird. In den Ausführungsbeispielen gemäß Fig. 1 bis 3 fluchten die Abtriebswellen 282 und 292 mit jeweils einer der orthogonalen Achsen 26, 27. Der Positionskopf 25 ist starr an der mit der dreh-oder schwenkbaren Achse 27 fluchtenden Abtriebswelle 292 des Schrittmotors 29 befestigt, während das Gehäuse 291 des Schrittmotors 29 starr mit der Abtriebswelle 282 gekoppelt ist, die ihrerseits mit der feststehenden Achse 26 fluchtet. Hierzu ist die Abtriebswelle 292 des Schrittmotors 29 in einem etwa gabelförmigen Träger 31 gelagert und das Gehäuse 291 des Schrittmotors 29 an dem Träger 31 angeflanscht. Der Träger 31 sitzt drehfest auf der Abtriebswelle 282 des Schrittmotors 28, dessen Gehäuse 281 mittels eines Halters 40 an der Decke 30 des Raumes befestigt ist.

In Fig. 2 ist die räumlich feststehende Achse 26 im wesentlichen vertikal ausgerichtet. In diesem Fall ist der Projektionskopf 25 derart an der Abtriebswelle 292 des Schrittmotors 29 befestigt, daß seine optische Achse mit der feststehenden Achse 26 in einer gemeinsamen Ebene liegt, und zwar unabhängig von der Schwenkstellung des Projektionskopfes 25 um die Achse 27. In Fig. 3 ist hingegen die räumlich feststehende Achse 26 im wesentlichen horizontal ausgerichtet.

Die Steuerelektronik 17 weist zwei Steuergeneratoren 32, 33 auf, von welchen jeweils einer über das Verbindungskabel 24 mit einem Schrittmotor 28 bzw. 29 verbunden ist. Jeder Steuergenerator 32, 33 erzeugt eine Steuerimpulsfolge, welche eine Drehung des zugeordneten Schrittmotors 28 bzw. 29 um einen durch ein Verstellsignal am Eingang des Steuergenerators 32 bzw. 33 vorgegebenen Drehwinkel bewirkt. Die Verstellsignale werden von jeweils einem Differenzbildner 34 bzw. 35 abgenommen. Die Differenzbildner 34, 35 sind einerseits sowohl mit den Ausgängen der Handschieber 21, 22 als auch mit Ausgängen eines Rechners 36 und andererseits mit den Ausgängen von zwei Speichern 37, 38 verbunden, deren Speichereingänge ebenfalls mit den vorgenannten Ausgängen von Handschiebern 21, 22 und Rechner 36 verbunden sind. Die Speicher 37, 38 sind so ausgebildet, daß die an dem Speichereingang anliegenden Speicherwerte zu dem Speicherinhalt hinzuaddiert werden.

Der Rechner 36 ist über den Eingang 39 mit einem Positionsmeßgerät, z. B. einem Satellitenempfänger, verbunden, das die Eigenposition des Schiffes vermißt und entsprechende Meßwerte liefert. Der Rechner 36 ist ferner mit den Bedienungstasten 20 verbunden, mittels welcher bestimmte Befehle oder Vorgaben in den Rechner 36 eingegeben werden können. Aus den Meßwerten vom Positionsmeßgerät und dem über die Tasten 20 dem Rechner 36 eingegebenen Maßstab der jeweils verwendeten Seekarte berechnet der Rechner 36 maßstabsgerechte Positionskoordinaten und daraus unter Berücksichtigung des geometrischen Bezuges zwischen dem Ort des Projektionskopfes und dem Ort der Seekarte sog. Sollstellsignale für den Projektionskopf 25, und zwar für jede Drehachse 26, 27 des Projektionskopfes 25 getrennt. Diese Sollstellsignale werden für jede Drehachse 26, 27 getrennt den Speichern 37, 38 und den Differenzbildnern 34, 35 zugeführt. Durch die Aufsummierung in den Speichern 37, 38 wird jede Veränderung der Stellungen der Schrittmotoren 28, 29 festgehalten, so daß der Speicherinhalt der Speicher 37, 38 ein Maß für die jeweilige Momentanstellung der beiden Schrittmotoren 28, 29 ist. Aus den Sollstellsignalen und den die Momentanposition der Schrittmotoren 28, 29 kennzeichnenden Speicherwerten in den Speichern 37,38 gewinnen die Differenzbildner 34, 35 die Verstellsignale für die Schrittmotoren 28, 29. In gleicher Weise werden auch die von den Hand schiebern 21, 22 bei ihrer manuellen Verschiebung erzeugten Sollstellsignale gespeichert und verarbeitet. Die Speicherausgänge der Speicher 37, 38 sind zusätzlich noch mit dem Rechner 36 verbunden, so daß letzterer jederzeit die Momentanposition der Schrittmotoren 28, 29 abrufen kann.

Da der Projektionskopf 25 wahlweise, und zwar von Hand, auf den vertikal aufgehängten Kartenhalter 10 oder auf den horizontal liegenden Kartenhalter 10 gerichtet werden kann und im Kartenhalter 10 jeweils Seekarten mit unterschiedlichem Maßstab aufgespannt sein können, muß die Projektionsvorrichtung 13 einjustiert werden, d. h. es muß der Bezug zwischen dem Ort des Kartenhalters 10 und dem Ort des Projektionskopfes 25 sowie der Maßstabsbezug zur verwendeten Seekarte hergestellt werden. Hierzu wird mit den Bedienungstasten 20 dem Rechner 36 der Kartenmaßstab der verwendeten Seekarte eingegeben. Mittels der Handschieber 21, 22 wird nunmehr der Projektionskopf 25 so gesteuert, daß sein Lichtpunkt 14 auf den äußersten Koordinatenpunkt an einer Kartenecke, z. B. links unten, auftrifft. Die in der Seekarte abzulesenden Koordinaten dieses Koordinatenpunktes werden mittels der Bedienungstasten 20 wiederum dem Rechner 36 eingegeben. Das ganze wiederholt sich mit zwei weiteren Koordinatenpunkten an einer zweiten und dritten Kartenecke. Der Rechner 36 berechnet nunmehr aus den eingegebenen Koordinatenwerten der drei Koordinatenpunkte und aus den durch die Veränderung der Stellung der beiden Schrittmotoren 28, 29 erfaßbaren Veränderungen der Projektionsrichtung des Projektionskopfes 25, die zur Ausrichtung des Lichtpunktes auf diese drei Koordinatenpunkte erforderlich waren, die Lage der Seekarte in bezug auf eine definierte Projektionsrichtung des Projektionskopfes 25. Für diese Veränderungen der Projektionsrichtung des Projektionskopfes 25 sind die jeweiligen Speicherinhalte der Speicher 37, 38 nach Einstellen des Lichtpunktes 14 auf die drei Koordinatenpunkte charakteristisch. Der von dem Rechner 36 somit erfaßte Bezug wird dann bei der Generierung von Sollstellsignalen aus am Eingang 39 anliegenden Werten der Standortvermessung als Umrechnungsfaktor berücksichtigt. Damit ist die Projektionsvorrichtung 13 einjustiert. Die beschriebene Ausrichtung der Projektionsrichtungen des Projektionskopfes 25 wird im Rechner 36 in das Koordinatensystem der aufgespannten Karte umgerechnet und ist an einem Ausgang 41 des Rechners 36 zur Übertragung an einen externen Datenempfänger abnehmbar.

Werden nunmehr von dem Positionsmeßgerät Meßwerte für die Eigenschiffposition an den Rechner 36 geliefert, so errechnet dieser aus diesen Meßwerten unter Berücksichtigung des Kartenmaßstabes und des durch die Einjustierung festliegenden Umrechnungsfaktors für jede Drehachse 26, 27 des Projektionskopfes 25 ein Sollstellsignal. Die Differenzbildner 34, 35 berechnen daraus und aus den in den Speichern 37, 38 abgespeicherten Momentanpositionen der Schrittmotoren 28, 29 ein Verstellsignal für jeden der beiden Schrittmotoren 28, 29. Aus diesen Verstellsignalen generieren die Steuergeneratoren 32, 33 entsprechende Steuerimpulsfolgen. Entsprechend diesen Steuerimpulsfolgen werden die Schrittmotoren 28, 29 angetrieben, die wiederum den Projektionskopf 25 so verschwenken, daß der Lichtpunkt 14 exakt auf denjenigen Kartenpunkt projiziert wird, dessen Koordinaten den von dem Positionsmeßgerät gelieferten Meßwerten entspricht.

In der Anzeige 23 werden diese Koordinaten des Lichtpunktes 14, also die Eigenposition des Schiffes, als Zahlenwerte angezeigt. Außerdem dient die Anzeige 23 noch zur Kontrolle der mittels der Bedientasten 20 dem Rechner 36 zugeführten Eingabewerte.

**Ansprüche**

1. Einrichtung zur Standortanzeige auf einer Karte, insbesondere zur Anzeige einer Schiffsposition auf einer Seekarte, mit einem Kartenhalter zum Aufspannen der Karte, mit einer Projektionsvorrichtung zum Projizieren eines Lichtpunktes auf die Aufspannfläche des Kartenhalters, die einen einen gebündelten Lichtstrahl erzeugenden Projektionskopf und zwei separate Antriebe zum Verstellen des Projektionskopfes aufweist, und mit einer Steuerelektronik, welche Meßdaten über den vermessenen Standort in kartenmaßstabsgerechte Positionskoordinaten umsetzt und den Positionskoordinaten entsprechende Verstellsignale an die Antriebe ausgibt, dadurch gekennzeichnet, daß der Projektionskopf (25) auf der die Aufspannfläche - (11) tragenden Seite des Kartenhalters (10) mit Abstand von diesem um zwei zueinander orthogonale Achsen (26, 27) dreh-oder schwenkbar angeordnet ist, von denen die eine räumlich feststehend und die andere in einer zu der feststehenden Achse (26) rechtwinkligen Ebene dreh-oder - schwenkbar ausgebildet ist, und daß die Antriebe als den Projektionskopf (25) um jeweils eine der Achsen ( 26, 27) drehende Motoren, vorzugsweise Schrittmotoren (28, 29), ausgebildet sind.

2. Einrichtung nach Anspruch 1, dadurch gekennzeichnet, daß die Anordnung des Projektionskopfes (25) mittels Kaskadierung der Motoren (28, 29) vorgenommen ist.

3. Einrichtung nach Anspruch 2, dadurch gekennzeichnet, daß die Abtriebswellen (282, 292) der Motoren (28, 29) mit jeweils einer der orthogonalen Achsen (26, 27) fluchten und daß der Projektionskopf (25) an der mit der dreh-oder - schwenkbaren Achse (27) fluchtenden Abtriebswelle (292) starr befestigt ist.

4. Einrichtung nach Anspruch 3, dadurch gekennzeichnet, daß die feststehende Achse (26) im wesentlichen vertikal ausgerichtet ist und daß der Projektionskopf (25) an der Abtriebswelle (292) derart befestigt ist, daß seine optische Achse und die feststehende Achse (26) in einer gemeinsamen Ebene liegen.

5. Einrichtung nach einem der Ansprüche 1 bis 4, dadurch gekennzeichnet, daß mit der Steuerelektronik (17) zwei Handschalter (21, 22) zum manuellen Auslösen einer vorgebbaren Dreh-oder Schwenkbewegung des Projektionskopfes (25) um jede seiner Achsen (26, 27) verbunden ist.

Fig.1

Fig. 2

Fig. 3

Fig. 4

0 220 528

Europäisches
Patentamt

**EUROPÄISCHER RECHERCHENBERICHT**

Nummer der Anmeldung

EP 86 11 3602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 238 841 (H. BJELLAND) <br> * Spalten 4,6-8; Figuren 1,5 * | 1 | G 09 B 29/10 |
| A | | 2,4 | |
| | --- | | |
| Y | US-A-3 789 397 (J. EVANS) <br> * Spalte 3, Zeilen 38-68; Spalte 4, Zeilen 1-10; Figuren * | 1 | |
| A | | 2,4 | |
| | --- | | |
| A | EP-A-0 154 018 (PRAKLA-SEISMOS GmbH) <br> * Seiten 7,8; Figur * | 1,5 | |
| A | US-A-2 911 538 (O. MUNZ) | | RECHERCHIERTE SACHGEBIETE (Int. Cl.4) <br><br> G 09 B |
| | --- | | |
| A | DE-A-2 134 383 (SIEMENS AG) | | |
| | ----- | | |

Der vorliegende Recherchenbericht wurde für alle Patentansprüche erstellt.

| Recherchenort <br> DEN HAAG | Abschlußdatum der Recherche <br> 02-02-1987 | Prüfer <br> ODGERS M.L. |
|---|---|---|